# DEMANDE DE BREVET EUROPEEN

(11) **EP 1 726 935 A1**
(43) Date de publication de la demande: **29.11.2006**
(21) Numéro de dépôt: 06290722.5
(22) Date de dépôt: 05.05.2006
(51) Int. Cl.: G01L 5/00

(54) **Cellule de mesure d'effort et axe de liaison équipé d'une telle cellule**

(30) Priorité: 25.05.2005 FR 0505251
(71) Demandeur: MESSIER-BUGATTI, 78140 Velizy Villacoublay (FR)
(72) Inventeur: Dellac, Stéphane, 31170 Tournefeuille (FR); Lafaye, Emmanuel, 75015 Paris (FR)
(74) Mandataire: Parzy, Benjamin Alain

(57) **Abrégé**

L'invention concerne une cellule de mesure d'effort (20) destinée à être insérée dans un alésage (13) d'un axe (12), caractérisée en ce qu'elle comporte une douille :
- ayant une paroi (21) généralement cylindrique tubulaire avec une surface externe adaptée à s'étendre contre une surface interne de l'alésage de l'axe ;
- à l'intérieur de laquelle s'étend au moins un capteur (23) apte à mesurer au moins un paramètre représentatif de contraintes subies par la paroi.

L'invention concerne également un axe muni d'une telle cellule de mesure d'effort.

## Description

L'invention concerne une cellule de mesure d'effort destinée à être insérée dans un axe de liaison et un axe de liaison comportant une telle cellule.

### ARRIERE-PLAN DE L'INVENTION

On connaît du document US 3 695 096 des axes de liaison équipés de jauges de contraintes et destinés à être installés dans des chapes de deux éléments à relier afin de mesurer l'effort subi par les éléments lors d'un chargement de ceux-ci qui sollicite l'axe de liaison.

En particulier, dans le domaine des freins aéronautiques, il est connu d'équiper de jauges de contraintes le toc de reprise de couple d'un frein ou l'axe de liaison d'une barre de reprise de couple au frein associé afin de déterminer l'effort de cisaillement subi par le toc ou l'axe lors d'un freinage, et, partant, de mesurer le couple de freinage développé par ledit frein.

On connaît également du document US 4 474 060 une bague équipée de jauges de contraintes qui est installée dans l'une des chapes qui reçoit l'axe de liaison du de la barre de reprise de couple au frein associé. La bague a une forme spéciale qui induit une déformation mesurable de sa paroi sous l'effet d'un chargement qui sollicite l'axe de liaison.

Dans ces deux solutions, la diversité des tailles de freins conduit à dimensionner des axes ou des bagues spécifiques pour chacun des freins.

### OBJET DE L'INVENTION

L'invention a pour objet des moyens de mesure d'effort qui puissent être facilement installés, sans pour autant faire l'objet d'un dimensionnement spécifique pour chacun des freins.

### BREVE DESCRIPTION DE L'INVENTION

Selon l'invention, on propose une cellule de mesure d'effort destinée à être insérée dans un alésage d'un axe de liaison et comportant une douille :
- ayant une paroi généralement cylindrique tubulaire avec une surface externe adaptée à s'étendre contre une surface interne de l'alésage de l'axe ;
- à l'intérieur de laquelle s'étend au moins un capteur apte à mesurer au moins un paramètre représentatif de contraintes subies par la paroi.

La paroi de la cellule est ainsi astreinte à suivre les déformations de l'axe et subit donc des contraintes associées à ces déformations, de sorte que le capteur délivre une mesure qui est représentative de l'effort subi par l'axe.

Ainsi, on dissocie selon l'invention la reprise des efforts qui est assurée par l'axe de liaison, et la mesure des efforts subis par l'axe qui est assurée par la cellule de mesure d'effort.

La cellule de mesure d'effort étant ainsi prévue séparée de l'axe, elle peut être adaptée à divers axes ayant des épaisseurs différentes mais présentant tous le même diamètre d'alésage. Ainsi, une même cellule peut être utilisée pour des freins de tailles variées.

L'invention est également relative à un axe de liaison équipé d'une telle cellule.

### BREVE DESCRIPTION DES DESSINS

L'invention sera mieux comprise à la lumière de la description qui suit en référence aux figures des dessins annexés parmi lesquelles :
- la figure 1 est une vue de côté d'un atterrisseur principal d'aéronef, les roues extérieures ayant été omises;
- la figure 2 est une vue en coupe selon la ligne II-II de la figure 1 de la liaison entre l'une des barres de reprise de couple équipant l'atterrisseur et le frein associé;
- la figure 3 est une vue analogue à la figure 2 d'une variante de réalisation ;
- la figure 4 est une vue analogue à la figure 2 d'une application d'un axe de l'invention à une liaison en double cisaillement ;
- la figure 5 est une vue en coupe longitudinale d'une cellule de mesure d'effort selon un mode particulier de réalisation de l'invention.

### DESCRIPTION DETAILLEE DE L'INVENTION

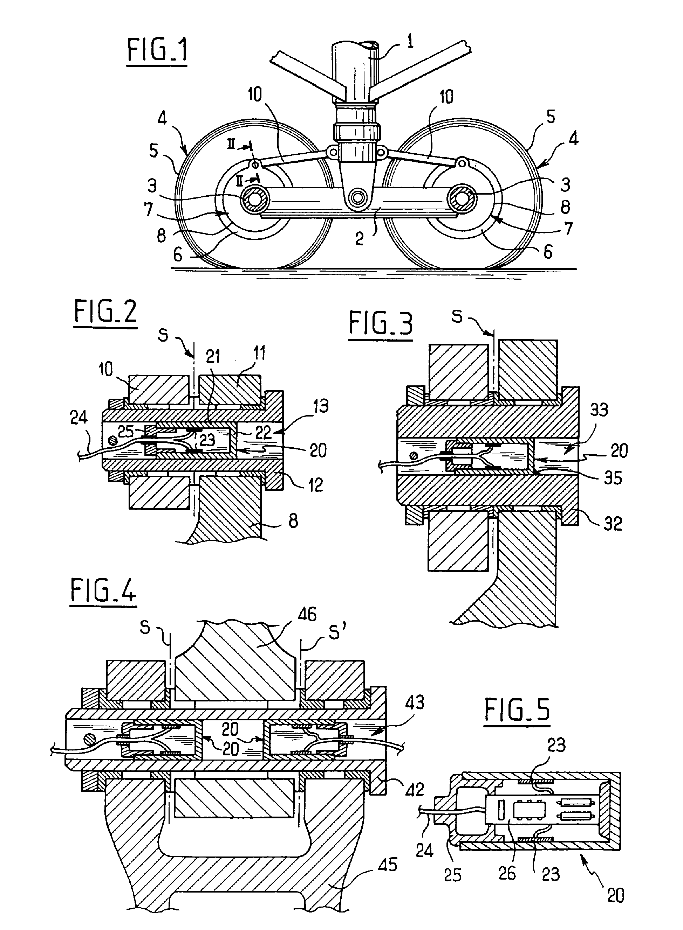

En référence à la figure 1 qui illustre un atterrisseur principal d'un aéronef commercial à quatre roues (dont deux ont été ici omises), l'atterrisseur comporte de façon connue en soi une jambe 1 à l'extrémité de laquelle un balancier 2 est monté articulé. A l'extrémité du balancier 2 s'étendent deux essieux 3 que l'on distingue ici en coupe.

Les essieux 3 portent des roues 4 comportant chacune un pneumatique 5 monté sur une jante 6.

Dans chacune des jantes 6 s'étend un frein 7 qui, de façon connue en soi, comporte des disques rotors qui sont liés en rotation à la jante 6 et qui sont disposés en alternance avec des disques stators liés en rotation à un tube de torsion (non visible ici) du frein 7. Le tube de torsion comporte d'un côté une mâchoire fixe et de l'autre côté une couronne 8 portant des pistons ou poussoirs actionnés sélectivement pour appliquer les disques les uns contre les autres.

L'ensemble constitué du tube de torsion et de la couronne 8 est monté libre en rotation sur l'essieu associé 3, mais est arrêté angulairement au moyen d'une barre de reprise de couple 10 qui s'étend entre la jambe 1 et la couronne 8 en étant articulée à ces deux éléments, de sorte que la couronne, le tube de torsion et les disques stators sont empêchés de tourner.

Lors d'un freinage, les pistons portés par la couronne 8 pressent les disques les uns contre les autres, le différentiel de vitesse angulaire entre les disques rotors et les disques stators générant un couple de frottement qui tend à freiner la roue 4 associée. La barre de reprise de couple 10 subit un effort proportionnel à ce couple de freinage, qu'il est dès lors intéressant de mesurer pour estimer le couple de freinage développé par le frein.

Comme cela est visible à la figure 2, la barre de reprise de couple 10 est reliée à une chape 11 de la couronne 8 par un axe de liaison 12.

Ainsi disposé, l'axe 12 subit lors des freinages un effort de cisaillement particulièrement important dans la section S de l'axe qui s'étend entre la barre de reprise de couple 10 et la chape 11.

Selon l'invention, l'axe 12 présente un alésage 13 dans lequel une cellule de mesure d'effort 20 est insérée.

La cellule de mesure d'effort 20 comprend une douille creuse ayant une paroi cylindrique 21 tubulaire d'un diamètre externe légèrement inférieur au diamètre interne de l'alésage 13 de sorte que la cellule est ici mise en place à force dans l'alésage. La douille creuse comporte par ailleurs un fond 22.

Sur la face interne de la paroi cylindrique 21 sont collées des jauges de contrainte 23. Un conducteur électrique 24 relié aux jauges de contraintes 23 s'étend au travers d'un capuchon 25 qui ferme la cellule de mesure d'effort 20 à étanchéité.

L'épaisseur de la paroi cylindrique 21 est choisie, compte tenu des caractéristiques du matériau constitutif de cette paroi, pour conférer à cette paroi la souplesse nécessaire pour qu'elle puisse suivre facilement les déformations de l'axe 12 tout en présentant une rigidité suffisante pour permettre la mise en place aisée de la cellule 20 dans l'alésage 13 de l'axe 12.

La cellule de mesure d'effort 20 est placée dans l'alésage 13 de l'axe 12 de sorte que les jauges de contraintes 23 s'étendent sensiblement dans la section S entre la barre de reprise de couple 10 et la chape 11.

A cet effet, on peut comme ici utiliser un axe avec un alésage lisse et recourir lors du montage de la cellule dans l'alésage à un moyen d'arrêt externe pour positionner longitudinalement la cellule 'dans l'alésage. Il est encore possible de prévoir dans l'alésage un épaulement de positionnement longitudinal de la cellule.

Ainsi, les jauges de contraintes mesurent les déformations de la paroi cylindrique 21 représentatives des déformations de l'axe 12 dans la section S de plus grand cisaillement. Il est facile d'en déduire une estimation du couple de freinage généré par le frein 7 associé.

La cellule de mesure d'effort 10 est avantageusement mise en place dans l'axe 12 en respectant un calage angulaire donné entre l'axe 12 et la cellule 10, des moyens non représentés permettant d'arrêter l'axe 12 en rotation par rapport l'un des éléments de la barre de reprise de couple 10 ou de la couronne 8. Ainsi, l'orientation des jauges de contraintes 23 par rapport à la direction des efforts subis par l'axe 12 est parfaitement déterminée.

L'utilisation d'une cellule de mesure d'effort distincte de l'axe lui-même permet de réutiliser cette cellule pour un frein de dimensions différentes.

Comme cela est visible à la figure 3, la même cellule de mesure d'efforts 20 est réutilisée pour être insérée dans l'alésage 33 d'un axe 32 de diamètre extérieur plus important, adapté à un frein de dimensions plus importantes et donc susceptible de développer un couple de freinage plus important.

Comme cela est visible à la figure 4, la même cellule 20 peut également être utilisée pour équiper un axe 42 monté pour articuler un premier membre de contrefiche 45 qui comporte une double chape à un second membre de contrefiche 46 qui comporte une simple chape.

L'axe 42 comporte un alésage 43 dans lequel deux cellules 20 sont insérées de sorte que les jauges de contraintes associées s'étendent respectivement dans les sections S et S' de plus grand cisaillement de l'axe 42.

Ainsi donc, dans les divers modes de réalisation illustrés ici, les axes 12, 32, 42 ont tous un même diamètre d'alésage.

La ou les cellules de mesure d'effort sont avantageusement immobilisées dans l'alésage de l'axe associé par un collage, par un soudage, ou par l'utilisation de tout autre moyen d'immobilisation approprié. Par exemple sur le montage illustré à la figure 3, on distingue un point de soudure 35 réalisé entre l'axe 33 et la cellule de mesure d'effort 20.

Comme cela est visible à la figure 5, la cellule de mesure d'effort 20 contient, selon un mode particulier de réalisation de l'invention, une électronique 26 de traitement du signal provenant des jauges de contraintes 23. Ici, l'électronique 26 comprend notamment les résistances complémentaires d'un pont de Wheatstone dans lequel les jauges de contraintes 23 sont insérées de façon connue en soi. Le conducteur électrique 24 sortant de la cellule à travers le capuchon 25 transmet alors une information traitée directement représentative de l'effort subi par l'axe.

L'invention n'est pas limitée à ce qui vient d'être décrit, mais bien au contraire englobe toute variante entrant dans le cadre défini par les revendications.

En particulier, bien que l'on ait indiqué que la cellule est liée à l'axe dans lequel elle est insérée par une liaison définitive de type soudage ou collage, la cellule pourra également être prévue démontable de l'axe.

Bien que la cellule illustrée ici mette en oeuvre des jauges de contraintes, la cellule pourra plus généralement faire appel à tout capteur apte à mesurer au moins un paramètre représentatif de contraintes subies par la paroi de la cellule, comme un capteur piézoélectrique ou un capteur ultrasonore.

## Revendications

1. Cellule de mesure d'effort (20) destinée à être insérée dans un alésage (13;33;43) d'un axe (12;32;42), **caractérisée en ce qu'**elle comporte une douille :
- ayant une paroi (21) généralement cylindrique tubulaire avec une surface externe adaptée à s'étendre contre une surface interne de l'alésage de l'axe ;
- à l'intérieur de laquelle s'étend au moins un capteur (23) apte à mesurer au moins un paramètre représentatif de contraintes subies par la paroi.

2. Cellule de mesure d'effort selon la revendication 1 comportant des moyens de son étanchéité (22 ;25).

3. Cellule de mesure d'effort selon la revendication 2, dans laquelle les moyens d'étanchéité comportent d'une part un fond (22) venu de matière avec la paroi cylindrique (21) et d'autre part un capuchon (25) rapporté à une extrémité de la paroi cylindrique (21) opposée au fond.

4. Cellule de mesure d'effort selon la revendication 1 dans laquelle le capteur comprend des jauges de contraintes (23) s'étendant contre une surface interne de la paroi (21).

5. Cellule de mesure d'effort selon la revendication 1, comportant une électronique (26) associée au capteur (23), l'électronique s'étendant à l'intérieur de la cellule.

6. Ensemble de mesure d'effort comportant un axe (12;32;42) présentant un alésage (13;33;43) dans lequel est inséré au moins une cellule de mesure d'effort (20) selon l'une des revendications précédentes de sorte que la surface externe de la paroi (21) de la cellule s'étende contre la surface interne de l'alésage de l'axe.

7. Ensemble selon la revendication 6 dans lequel la cellule de mesure d'effort (20) est montée à force dans l'alésage (13;33;43) de l'axe (12;32;42).

8. Ensemble selon la revendication 6, dans lequel le capteur comprend des jauges de contraintes (23) s'étendant contre une surface interne de la paroi (21) de la cellule, la cellule étant disposée dans l'alésage de sorte que les jauges de contraintes (23) de la cellule de mesure d'effort (20) s'étendent sensiblement dans une section (S,S') de plus grand cisaillement de l'axe (12;32;42) lorsque celui-ci est en place dans une liaison.

9. Ensemble selon la revendication 6, dans lequel la cellule est immobilisée dans l'alésage de l'axe.
